# DEMANDE DE BREVET EUROPEEN

(11) **EP 2 351 662 A1**
(43) Date de publication de la demande: **03.08.2011**
(21) Numéro de dépôt: 10195953.4
(22) Date de dépôt: 20.12.2010
(51) Int. Cl.: B60N 2/00, B60N 5/00, B61D 33/00, G07B 15/02, G07B 15/04, G07C 9/00, G08B 5/00

(54) **Siège voyageur pour véhicule de transport public et dit véhicule**

(30) Priorité: 07.01.2010 FR 1000054
(71) Demandeur: Société Nationale des Chemins De Fer Français - SNCF, 75014 Paris (FR)
(72) Inventeur: Jolivet, Sylvain, 95220, Herblay (FR); Gallais, Cédric, 97950, Saint Marcel (FR); Galtier, Philippe, 75015, Paris (FR)
(74) Mandataire: Gaillarde, Frédéric F. Ch.

(57) **Abrégé**

La présente invention se rapporte à un siège (1) voyageur pour véhicule (4) de transport en commun **caractérisé en ce que** le siège est équipé d'au moins un lecteur sans contact (5), notamment lecteur optique et / ou magnétique ainsi qu'à un véhicule de transport en commun comprenant au moins un tel siège.

## Description

La présente invention se rapporte à un équipement voyageur pour transport public, notamment un train, ainsi qu'à une architecture dudit transport public.

Un des principaux défis d'un opérateur de transport public est l'optimisation des opérations de contrôle de la validité des titres de transports du voyageur.

Cette optimisation de la gestion des flux de voyageurs permet également une meilleure gestion du remplissage dudit transport et par voie de conséquence une amélioration de la rentabilité.

Un aspect important souhaitable est donc de pouvoir connaître quasiment en temps réel l'occupation dudit moyen de transport, tout en facilitant et en améliorant l'efficacité du travail de ses agents.

Du côté voyageur, il est bien évidemment également souhaitable d'optimiser son temps de voyage, notamment en raccourcissant au maximum les opérations successives d'achat de billet, enregistrement, embarquement, etc ...

Par rapport à d'autres moyens de transport public tels que l'avion, le car, ou autre dans lequel le nombre limité de voies d'accès permet de faire un contrôle systématique des voyageurs, le train présente la spécificité de permettre l'accès à un grand nombre de voyageurs sur une longueur importante, les voyageurs pouvant embarquer et débarquer par une pluralité de portes réparties le long du train.

Par ailleurs, pour les trajets courts, le temps nécessaire à la prise en charge des passagers peut se révéler très important relativement audit temps de trajet voire supérieur à ce dernier.

Du côté voyageur, on notera également que dans de nombreux trajets courts, l'étape d'achat du billet à un guichet en cas d'affluence peut vite devenir un facteur de mécontentement considérant le temps de trajet effectif.

En effet, contrairement à l'avion, le voyageur attend généralement du train un service le plus souple possible.

De ce fait, il existe un besoin pour des technologies permettant de répondre à ces attentes, à la fois de la part de l'opérateur et de la part des voyageurs.

Une des technologies permettant d'optimiser ces aspects est la technologie dite « ticketless », à savoir sans titre de transport papier, ou encore avec titre dématérialisé, mettant en oeuvre des moyens de validation sans contact.

Dans le domaine du transport aérien, les billets électroniques sont maintenant largement répandus.

Dans les transports pendulaires de métropoles, comme le métro par exemple, on connaît les cartes d'abonnement sans contact, utilisant notamment une technologie RFID (radio fréquence identification) permettant de passer rapidement des portillons de validation en contrôlant l'accès.

Toutefois, toutes ces technologies utilisant des titres dématérialisés nécessitent une validation centralisée, soit à un comptoir, soit à un portillon, et ne sont pas satisfaisantes en l'état pour le domaine du train voyageur grande ligne.

La présente invention vise à pallier les déficiences précédemment mentionnées et vise pour ce faire un siège voyageur pour véhicule de transport en commun, **caractérisé en ce que** le siège est équipé d'au moins un lecteur sans contact, notamment lecteur optique et/ou magnétique.

Ainsi, en équipant les sièges de lecteurs sans contact, les passagers peuvent directement s'identifier auprès de leur siège. A partir d'un tel siège, il devient donc possible de développer toute une gestion en temps réel des voyageurs depuis l'achat de billets, la régularisation de billets, la validation et vérification de réservation, l'échange de sièges, etc ... Des applications personnalisées et multimédia peuvent également être envisagées.

Du côté opérateur, cet équipement permet également l'optimisation du travail du personnel de bord. Les diverses applications possibles seront détaillées plus loin.

De manière avantageuse, le lecteur est un lecteur optique de type lecteur de code à barre et/ou étiquette 2D. Cela permet la lecture de billets papier comportant un tel code imprimé, ou encore la lecture de codes sur écran de téléphone mobile par exemple. Cette lecture peut déclencher divers services et fonctionnalités. De cette manière, des billets achetés en ligne peuvent être validés directement au niveau du siège du voyageur. Cela permet également de gérer d'éventuels changements de siège par rapport à l'emplacement réservé.

De manière alternative ou complémentaire, le lecteur est un lecteur magnétique de type lecteur de circuit RFID. Cela permettra par exemple l'identification de titulaire d'abonnement par le biais d'une carte renfermant un circuit RFID et utilisant un mode de communication en champ proche (Near Field Communication, NFC).

Préférentiellement, le siège comprend au moins un capteur de présence, notamment par présence sur une assise. Un tel capteur permettra notamment d'activer le lecteur sans contact et les services, uniquement lorsqu'une personne se trouve sur le siège. Le capteur permettra également de détecter un siège occupé pour lequel le voyageur ne s'est pas enregistré ou n'a pas validé son billet. Ainsi, le contrôleur du train pourra, notamment sur les trajets courts, se concentrer en priorité sur la vérification et régulariser ces voyageurs.

De manière préférentielle, le siège comprend au moins un boîtier électronique embarqué apte à recevoir les données du lecteur sans contact et le cas échéant du capteur de présence.

Ce boîtier servira notamment à centraliser les applications et les diverses commandes.

Avantageusement, le boîtier électronique est apte à contrôler un ou plusieurs dispositifs annexes. On pourra notamment considérer les dispositifs annexes suivants : Liseuse, écran notamment tactile, prise audio, clavier virtuel, prise USB, etc ... et autres dispositifs, notamment multimédia, tels qu'on peut les trouver notamment dans les avions.

De manière préférentielle, le siège comprend des moyens de connexion à un réseau informatique de bord. Ainsi, en prévoyant une connexion à un réseau de bord, les services voyageurs, notamment multimédia et de billeterie ou encore de restauration, pourront être aisément centralisés.

La présente invention se rapporte également à un véhicule de transport en commun, **caractérisé en ce qu**'il comprend au moins un siège selon l'invention.

De manière avantageuse, il s'agit d'un train.

Avantageusement le véhicule comprend au moins un serveur de bord appartenant à un réseau de bord.

De manière préférentielle, le serveur de bord est apte à communiquer avec au moins un serveur distant. Ainsi, les données du serveur du véhicule pourront être mises à jour en temps réel et répercutées à des agences commerciales en station par exemple. Le serveur de bord pourra utiliser notamment une connexion de type EDGE, WI FI ou 3G.

De manière préférentielle, le serveur de bord est apte à communiquer avec au moins un terminal de bord. Ainsi, le personnel du train pourra avoir un retour d'informations sur les voyageurs accessibles sur le serveur du train.

On notera que les connexions au réseau de bord, que ce soient des sièges ou des terminaux pourront notamment se faire par connexion filaire et/ou sans fil.

Dans le cas d'un train, la liaison entre les voitures pourra se faire par connexion filaire, tandis que le réseau voiture pourra être filaire ou sans fil avec un serveur intermédiaire au niveau de la voiture.

La présente invention sera mieux comprise à la lumière de la description détaillée qui suit en regard du dessin annexé dans lequel :
- la figure 1 est une représentation schématique partielle d'un siège de train selon l'invention, un voyageur souhaitant s'y installer ;
- la figure 2 est une représentation schématique du siège de la figure 1 dans lequel le voyageur s'est installé ;

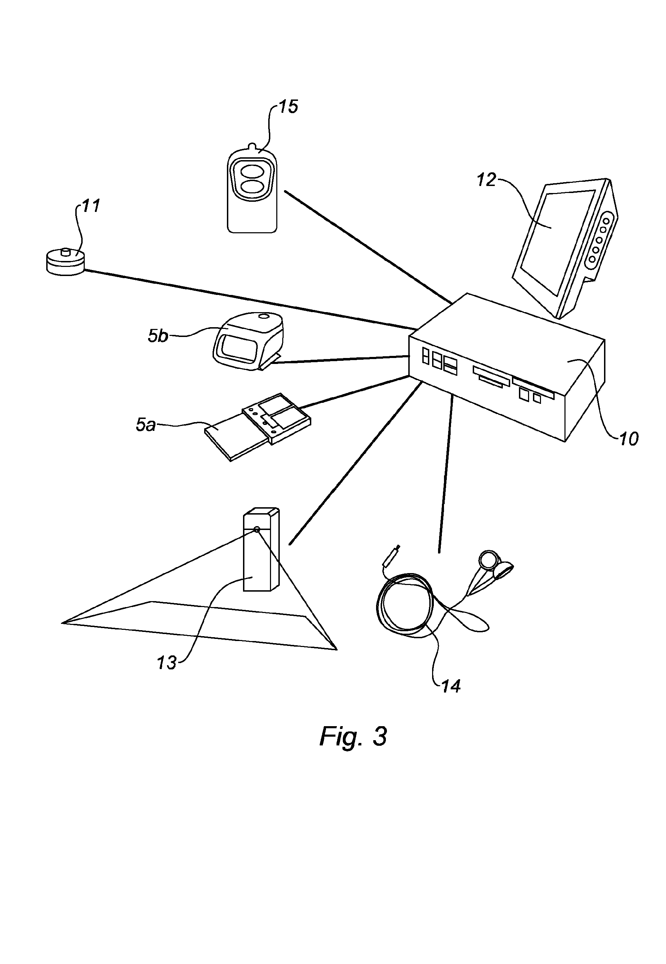

- la figure 3 est une représentation schématique du système électronique embarqué dans le siège de la figure 1 ;
- la figure 4 est une représentation schématique d'un train comprenant des sièges selon la figure 1 et reliés à un réseau de bord.

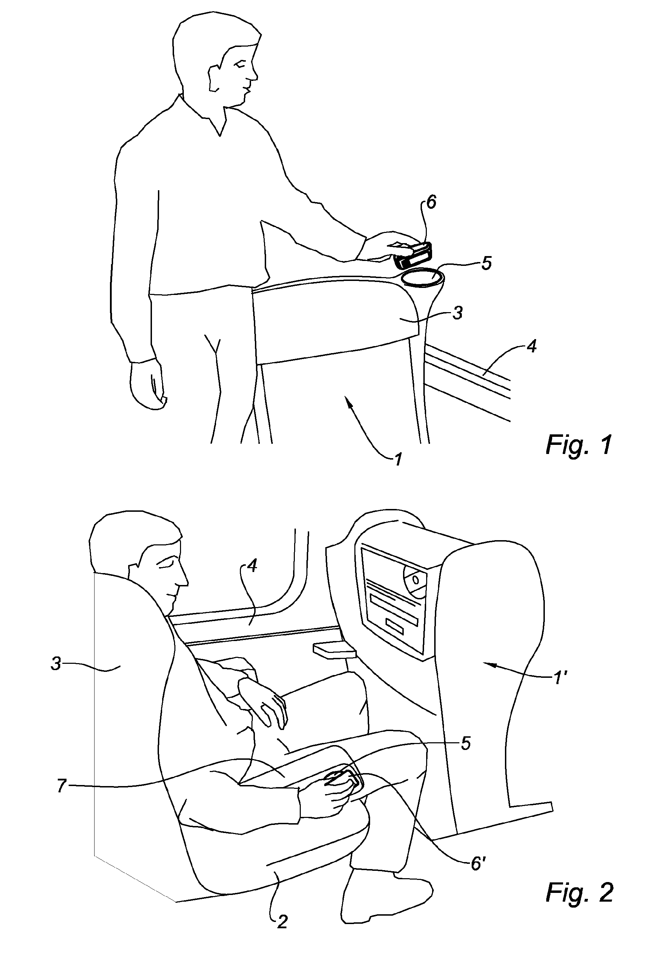

Les figures 1 et 2 montrent un siège 1 selon l'invention. Classiquement ce siège comprend une assise 2 et un dossier 3.

L'exemple représenté montre un siège 1 disposé dans une voiture 4 d'un train derrière un autre siège 1.

Conformément à l'invention et comme visible sur la figure 1, le dossier 3 du siège 1 intègre un lecteur sans contact 5 comprenant un lecteur optique 5b et un lecteur magnétique RFID 5a. En l'espèce, sur la figure 1, l'utilisateur présente son téléphone mobile 6 au lecteur pour identification et enregistrement. L'identification pourra se faire par lecture d'un code barre, de type code 2D notamment ou par puce sans contact.

Dans la variante de la figure 2, le lecteur sans contact 5 est intégré dans un accoudoir 7 du siège 1. L'utilisateur s'identifie à l'aide d'une carte à puce sans contact ou par lecteur d'un code barre sur un billet imprimé, par exemple.

Le siège 1 embarque un boîtier électronique 10 connecté au lecteur sans contact et apte à recevoir les données lues par ce dernier. Ce boîtier électronique 10 est connecté à tout un ensemble de dispositifs annexes qu'il commande et pilote.

Parmi ces dispositifs, on compte notamment un capteur de présence sur le siège 11, par exemple un capteur de pression, un écran 12 notamment un écran tactile, un clavier virtuel 13, un casque audio 14, une liseuse 15, le boitier électronique 10 comprenant bien évidemment les prises électroniques nécessaires au branchement de ces appareils et éventuellement des prises supplémentaires pour le branchement d'appareils du voyageur.

Le boîtier électronique 10 comprendra un ensemble de logiciels permettant de piloter ces dispositifs notamment en fonction de l'identification du voyageur par le capteur de présence et les lecteurs sans contact 5a, 5b. L'identification du voyageur permettra ainsi notamment d'activer un dossier de préférences personnelles par exemple.

Le capteur de présence 11 permet de désactiver ces équipements lorsque le siège 1 est inoccupé.

Conformément à un aspect complémentaire de l'invention, les sièges 1 sont connectés à un réseau informatique de bord.

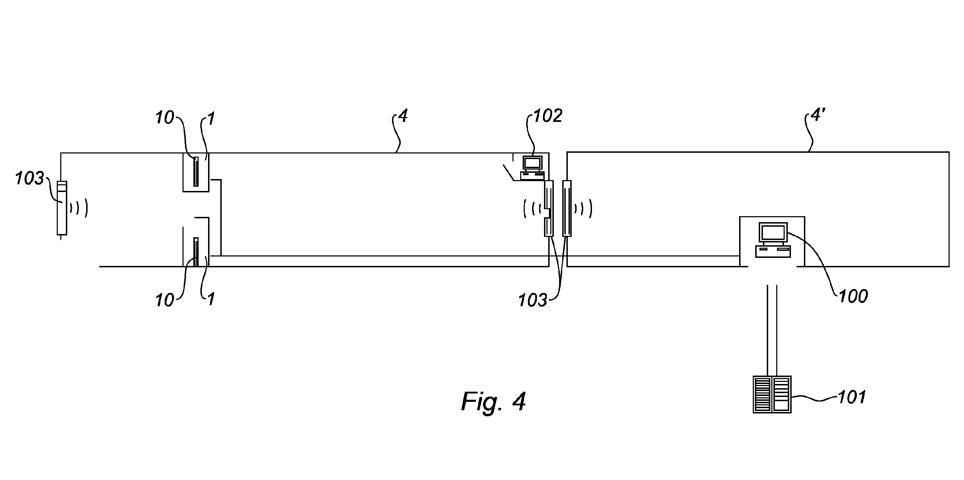

Un schéma simplifié d'un tel réseau est représenté à titre d'exemple à la figure 4.

En l'espèce, les sièges 1, dont deux seulement sont représentés pour la simplification de l'illustration, sont connectés par réseau filaire à un serveur de train 100 pouvant héberger diverses applications accessibles au terminal équipant les sièges.

Par ailleurs, ce serveur de train 100 pourra être équipé de moyens de communication avec un serveur central 101 de l'opérateur situé dans une voiture 4' Ce serveur central 101 pourra transmettre au serveur de train 100 toutes les informations nécessaires quant aux réservations existantes. De même en cas de modification des réservations des voyageurs ou modification de l'occupation du train, celles-ci pourront être répercutées en temps réel au serveur central 101.

Le serveur central pourra également servir de diffuseur de contenu multimédia aux boitiers électroniques 10 des sièges 1.

La communication avec le serveur central pourra s'effectuer par communication mobile de type EDGE ou 3G par exemple. La communication au sol pourra également s'effectuer en Wifi, la mise à jour du serveur pouvant s'effectuer en station par exemple.

Le personnel de bord pourra également consulter diverses informations sur des terminaux intermédiaires 102 disposés dans les voitures 4 ou encore sur des terminaux portables reliés au réseau par l'intermédiaire de points de connexion Wifi 103 par exemple. Ces terminaux pourront notamment recevoir une carte d'occupation des sièges 1.

Bien évidemment, les autres équipements électroniques peuvent également éventuellement être connectés en Wifi.

Une telle architecture de rame permet le développement de nombreuses applications de gestion des voyageurs et de personnalisation.

Bien que l'invention ait été décrite avec un exemple particulier de réalisation, il est bien évident qu'elle n'y est nullement limitée et qu'elle comprend tous les équivalents techniques des moyens décrits, ainsi que leurs combinaisons si celles-ci entrent dans le cadre de l'invention.

## Revendications

1. Siège (1) voyageur pour véhicule de transport (4) en commun **caractérisé en ce que** le siège est équipé d'au moins un lecteur (5) sans contact, notamment lecteur optique (5b) et/ou magnétique (5a).

2. Siège (1) selon la revendication 1, **caractérisé en ce que** le lecteur (5) est un lecteur optique (5b) de type lecteur de code à barre et/ou étiquette 2D.

3. Siège (1) selon l'une quelconque des revendications 1 ou 2, **caractérisé en ce que** le lecteur (5) est un lecteur magnétique (5a) de type lecteur de circuit RFID.

4. Siège (1) selon l'une quelconque des revendications 1 à 3, **caractérisé en ce qu**'il comprend au moins un capteur de présence (11), notamment par présence sur une assise (2).

5. Siège (1) selon l'une quelconque des revendications 1 à 4, **caractérisé en ce qu**'il comprend au moins un boîtier électronique (10) embarqué apte à recevoir les données du lecteur sans contact (5) et le cas échéant du capteur de présence (11).

6. Siège (1) selon la revendication 5, **caractérisé en ce que** le boîtier électronique (10) est apte à contrôler un ou plusieurs dispositifs annexes (12, 15, 13, 14).

7. Siège (1) selon l'une quelconque des revendications 1 à 5, **caractérisé en ce qu**'il comprend des moyens de connexion à un réseau informatique de bord (100).

8. Véhicule (4) de transport en commun, **caractérisé en ce qu**'il comprend au moins un siège (1) selon l'une quelconque des revendications 1 à 4.

9. Véhicule (4) selon la revendication 8, **caractérisé en ce qu**'il s'agit d'un train.

10. Véhicule (4) selon l'une quelconque des revendications 8 ou 9, **caractérisé en ce qu**'il comprend au moins un serveur de bord (100) appartenant à un réseau de bord.

11. Véhicule (4) selon la revendication 10, **caractérisé en ce que** le serveur de bord (100) est apte à communiquer avec au moins un serveur distant (101).

12. Véhicule (4) selon l'une quelconque des revendications 10 ou 11, **caractérisé en ce que** le serveur de bord (100) est apte à communiquer avec au moins un terminal de bord (102).
